# EUROPEAN PATENT APPLICATION

(11) **EP 3 128 402 A1**
(43) Date of publication of application: **08.02.2017**
(21) Application number: 16180237.6
(22) Date of filing: 19.07.2016
(51) Int. Cl.: G06F 3/042, G06F 3/046, G06F 3/0354

(54) **ELECTRIC WHITE BOARD AND CONTROL METHOD THEREOF**

(30) Priority: 05.08.2015 US 201562201171 P; 30.09.2015 KR 20150137976
(71) Applicant: Samsung Electronics Co., Ltd., Suwon-si, Gyeonggi-do 16677 (KR)
(72) Inventor: Lee, Dai-boong, Gyeonggi-do (KR); Lee, Sung-jae, Gyeonggi-do (KR)
(74) Representative: Taor, Simon Edward William

(57) **Abstract**

An electronic white board that includes a display configured to display a screen, a first sensor configured to sense a touch on the display, a second sensor configured to sense electromagnetic waves emitted from an object that touches the display, and a controller configured to perform a function that corresponds to the touch that is sensed by any one of the first sensor and the second sensor depending on whether the electromagnetic waves are sensed by the second sensor.

## Description

Apparatuses and methods consistent with exemplary embodiments relate to an electronic white board and a control method thereof, and more particularly to an electronic white board that can perform different functions through sensing of two kinds of touches and a method for controlling the electronic white board that can perform different functions in accordance with the sensed touches.

With the development of thin, lightweight, and large-sized screens for display devices, the potential applications of such a display device are beyond the existing TVs, monitors, and portable media reproduction devices. A potential application includes writing boards for lessons or presentations.

An electronic white board, which belongs to a display category called an LFD (Large Format Display), is an electronic device that can replace the black/white board in the related art, and is configured to display, on a display panel, the contents that are written by an object that touches the display panel. Utilization of such an electronic white board has been gradually increasing due to its screen configuration flexibility and visual effects.

However, the electronic white board has a drawback that functions to be performed through touches are designated one by one and are inconvenient to use. Specifically, in order to perform a writing operation, it is required to select a drawing pen function and then to perform a touch. Similarly, in order to erase the written contents, it is required to select an erase function and then to perform a touch.

One or more embodiments of the present disclosure provide an electronic white board that can perform different functions through sensing of two kinds of touches and a method for controlling the electronic white board that can perform different functions in accordance with the sensed touches.

One or more exemplary embodiments relate to an electronic white board including a display configured to display an image, a first sensor configured to sense a movement of a first object on the display, a second sensor configured to sense a movement of a second object, and a controller configured to perform a first function that corresponds to the sensed movement of the first object and a second function that corresponds to the sensed movement of second object, wherein the first sensor is different from the second sensor.

In some exemplary embodiments, the electronic white board includes wherein the first sensor is an IR (Infrared Ray) sensor or an touch sensor, and the second sensor is an EMI (Electromagnetic Induction) sensor.

Some exemplary embodiments of the electronic white board include wherein the first function is one of an erasing function and a line-drawing function, and the second function is the other function.

Exemplary embodiments may further include wherein the controller is further configured to acquire coordinates based on electromagnetic waves sensed from the EMI sensor.

Some exemplary embodiments of the electronic white board include wherein the second sensor is a Bluetooth receiver.

In some exemplary embodiments, the electronic white board includes wherein the function is determined based on identification information that is included in the sensed Bluetooth signal.

Some exemplary embodiments of the electronic white board include wherein the first sensor is an IR (Infrared Ray) sensor, and the controller acquires coordinates corresponding to the first object from the IR sensor.

In some exemplary embodiments, the electronic white board includes wherein the controller generates and displays graphics on coordinates corresponding to the second object, and the controller provides the erasing function on coordinates corresponding to the first object.

One or more embodiments include a method for controlling an electronic white board, including sensing a movement of a first object on a display by a first sensor and a movement of a second object on the display by the second sensor, and performing a first function that corresponds to the sensed movement of the first object and a second function that corresponds to the sensed movement of second object, wherein the first sensor is different from the second sensor.

Exemplary embodiments may further include wherein the first sensor is an IR (Infrared Ray) sensor or an touch sensor, and the second sensor is an EMI (Electromagnetic Induction) sensor.

Some exemplary embodiments include wherein the first function is one of an erasing function and a line-drawing function, and the second function is the other function.

In some exemplary embodiments, the method includes wherein the performing acquires coordinates based on electromagnetic waves detected from the EMI sensor.

Exemplary embodiments may further include wherein the second sensor is a Bluetooth receiver.

Some exemplary embodiments include wherein the performing performs the function based on identification information that is included in the sensed Bluetooth signal.

In some exemplary embodiments, the method further includes wherein the first sensor is an IR (Infrared Ray) sensor, and the performing acquires coordinates corresponding to the first object from the IR sensor.

Some exemplary embodiments further include generating and displaying graphics on coordinates corresponding to the second object, and providing the erasing function on coordinates corresponding to the first object.

One or more embodiments include an electronic white board include a display configured to display an image, a first sensor configured to detect a touch on the display from an object, a second sensor configured to detect electromagnetic waves emitted from the object, a controller configured to receive detection information from the first sensor and the second sensor, and a memory comprising a look-up table associating electromagnetic waves with drawing functions of preset colors, wherein the controller performs a drawing function of a preset color corresponding to the detected electromagnetic waves based on correspondence in the look-up table.

The above and other aspects, features, and advantages of certain embodiments of the present disclosure will be more apparent from the following description of the exemplary embodiments, taken in conjunction with the accompanying drawings, in which:
FIG. 1 illustrates a use type of an electronic white board according to an exemplary embodiment of the present disclosure;
FIG. 2 is a block diagram explaining the configuration of an electronic white board according to an exemplary embodiment of the present disclosure;
FIGS. 3 to 10 are views illustrating a non-interaction touch type that can be used in the electronic white board of FIG. 2;
FIGS. 11A to 12 are views illustrating an interaction touch type that can be used in the electronic white board of FIG. 2;
FIG. 13 is a view illustrating an example of an electronic white board implemented according to an exemplary embodiment of the present disclosure;
FIG. 14 is a view illustrating an embodiment in which two or more different functions are performed on the electronic white board of FIG. 13;
FIGS. 15A and 15B are views explaining in detail an erasing function of FIG. 14;
FIG. 16 is a view illustrating another embodiment in which two or more different functions are performed on the electronic white board of FIG. 13;
FIG. 17 is a view illustrating an interface screen that provides a menu for shifting dual function setting according to an exemplary embodiment of the present disclosure;
FIGS. 18A and 18B are views illustrating a menu in which setting of a pen and an eraser in a toolbar window can be changed; and
FIG. 19 is a diagram illustrating a method for controlling an electronic white board according to an exemplary embodiment of the present disclosure.

Throughout the drawings, like reference numerals will be understood to refer to like parts, components, and structures.

The following description with reference to one or more exemplary embodiments and methods of accomplishing the same, examples of which the accompanying drawings are provided to assist in a comprehensive understanding. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, and are used to enable a clear and consistent understanding of the present disclosure. Accordingly, it should be apparent to those skilled in the art that the following description of various embodiments are provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In the following description, like drawing reference numerals are used for the like elements, even in different drawings. The matters defined in the description, such as detailed construction and elements, are provided to assist in a comprehensive understanding of various embodiments of the present disclosure. However, various embodiments of the present disclosure can be practiced without those specifically defined matters. Also, well-known functions or constructions are not described in detail since they would obscure the application with unnecessary detail.

Terms such as 'first' and 'second' may be used to describe various components, but they should not limit the various components. Those terms are only used for the purpose of differentiating a component from other components. For example, a first component may be referred to as a second component, and a second component may be referred to as a first component and so forth without departing from the spirit and scope of the present disclosure. In addition, 'and/or' may include any one of or a combination of the components mentioned.

In addition, a singular form may include a plural from as long as it is not specifically mentioned in a sentence. In addition, "include/comprise" or "including/comprising" used in the specification represent that one or more components, operations, and elements exist or are added.

In the embodiments of the present disclosure, a 'module' or 'unit' performs at least one function or operation, and may be realized as hardware or software, or a combination thereof. In addition, a plurality of 'modules' or a plurality of 'units' may be integrated into at least one module and be realized as at least one processor (not illustrated) except for when they need to be realized as a certain hardware. They may be realized as a central processing unit (CPU) and an associated storage memory.

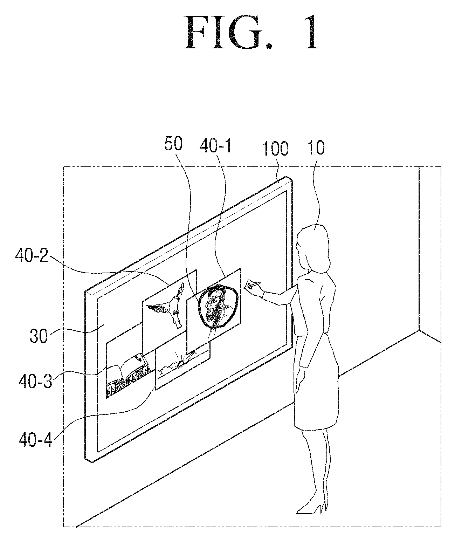

FIG. 1 is a view illustrating a use of an electronic white board according to an exemplary embodiment.

Referring to FIG. 1, an electronic white board 100 is hung on the wall. Further, on an image 30 that is displayed on a front surface, or display panel, of the electronic white board 100, a plurality of graphic objects 40-1, 40-2, 40-3, 40-4 are displayed. The graphic objects mean not only moving images, pictures, and photos but also all kinds of content that can be visually displayed on a display, such as an application execution window.

A user 10 can touch the electronic white board 100. Specifically, the user 10 touches the display panel on which the image 30 of the electronic white board 100 is displayed. The user 10 can touch the display with the nib of a pen 20.

As an exemplary embodiment, the user 10 draws a circle on the image 30. Specifically, the user 10 draws a circle 50 on the display with the pen 20 grasped by the user in order to emphasize one of the plurality of graphic objects 40 displayed on the image 30. This may be useful for highlighting an important focus area by a user. For example, the circling or highlighting may be used by an instructor to get the attention of the students. Instead of merely displaying a plurality of graphic objects, the instructor is able to emphasize where he wants the students to focus on.

Here, if the pen 20 touches the display, the electronic white board 100 executes a pen tool that draws a line along a touched path corresponding to the pen 20. Specifically, the electronic white board 100 generates corresponding graphics of the circle 50 along the touched path on the display and displays the generated graphics on the image 30.

As described above, the electronic white board 100 can display various graphic objects on various kinds of images, and can perform a predetermined function that corresponds to the touch of the pen 20.

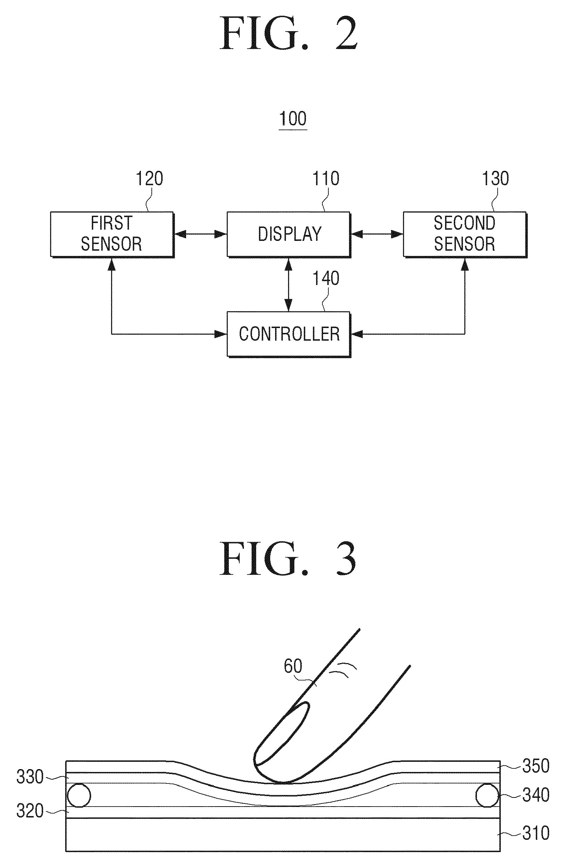

FIG. 2 is a block diagram illustrating the configuration of an electronic white board according to an embodiment of the present disclosure.

Referring to FIG. 2, the electronic white board 100 includes a display 110, a first sensor 120, a second sensor 130, and a controller 140.

The display 110 displays an image. Specifically, the display 110 may display an image for setting and executing functions of the electronic white board 100. For example, the display 110 may display an image that includes at least one of a background screen an application icon, an application execution window, a toolbar menu, a setting menu, a canvas for drawing a picture, and a graphic object.

The display 110 may be implemented by various display panels. For example, the display 110 may be implemented by various display panels, such as an LCD (Liquid Crystal Display) panel, a PDP (Plasma Display Panel), an OLED (Organic Light Emitting Diode), a VFD (Vacuum Fluorescent Display), an FED (Field Emission Display), and an ELD (Electro Luminescence Display). The display 110 may be a flexible display of which constituent elements are flexed or a 3D display that stereoscopically display the graphic object using a glass device or without glasses.

The first sensor 120 senses a movement of first object on the display 110. Specifically, the first sensor 120 may sense a touch that is made by a certain object on the display 110. The first sensor 120 may sense movements of all objects that come in contact with the display 110. Alternatively, the first sensor 120 may only sense the movements of particular objects having limited characteristics. The objects of which the touches can be sensed by the first sensor 120 may be limited depending on touch types. The touchable objects will be described later with reference to FIGS. 3 to 10.

The second sensor 130 senses a movement of second object on the display 110. Specifically, the second sensor 130 may sense electromagnetic waves that are emitted from the second object that touches the display 110.

The second sensor 130 may acquire touch coordinates of the second object using the electromagnetic waves emitted from the second object or may sense the electromagnetic waves emitted from the first object of which the touch is sensed by the first sensor 120.

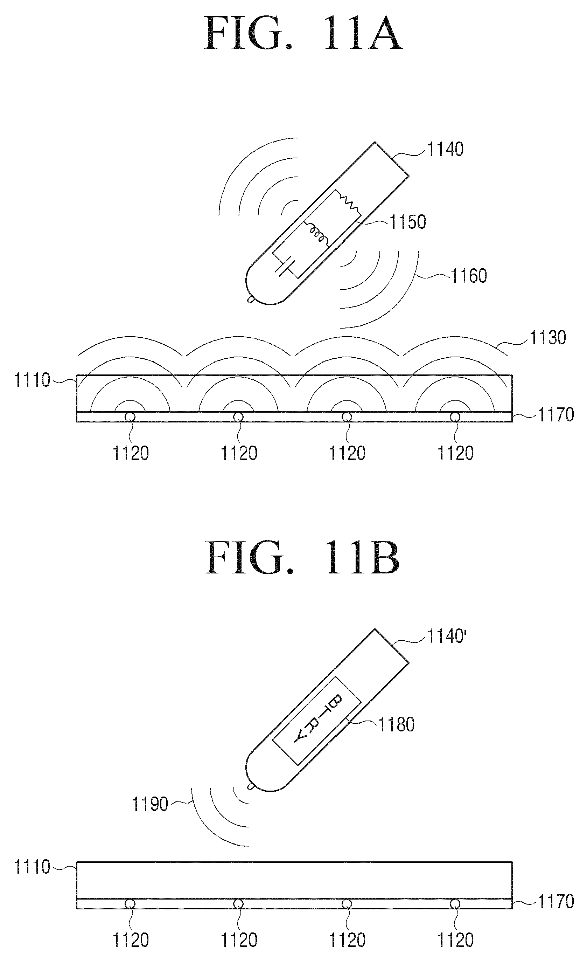

The second sensor 130 may not only sense the existence of the electromagnetic waves but also receive the electromagnetic waves. The second sensor 130 may analyze the electromagnetic waves. The second sensor 130 may detect different frequencies of the received electromagnetic waves according to different objects. Further, the second sensor 130 may detect different information according to objects included in the received electromagnetic waves. The information included in the electromagnetic waves may be identification information for identifying the objects. Exemplary details thereof are described later with reference to FIGS. 11A to 12.

The controller 140 can control respective constituent elements of the electronic white board 100. Specifically, the controller 140 may control the respective constituent elements for performing functions of the electronic white board 100, such as content reproduction, writing, drawing, and setting.

Depending on whether the electromagnetic waves are sensed, the controller 140 can perform a different function that corresponds to the touch of an object. The controller 140 configured to perform a first function that corresponds to the sensed movement of the first object and a second function that corresponds to the sensed movement of second object. Specifically, the controller 140 may perform a different function that corresponds to the touch that is sensed by any one of the first sensor 120 and the second sensor 130 depending on whether the electromagnetic waves are sensed by the second sensor 130.

The first sensor 120 may be an IR (Infrared Ray) sensor or a touch sensor. The second sensor may be an EMI (Electromagnetic Induction) sensor. That is, the first sensor may be different from the second sensor.

If the second sensor 130 is an EMI (Electromagnetic Induction) sensor, the controller 140 may acquire touch coordinates from the second sensor 130 that senses a position from which the electromagnetic waves are emitted. That is, the second sensor 130 senses the electromagnetic waves emitted from the object that touches the display 110 and transfers the corresponding coordinates from which the electromagnetic waves are received to the controller 140.

Here, the second sensor 130 may sense electromagnetic waves having different frequencies from a plurality of objects. Specifically, specific objects may be designated with predefined different frequencies. For example, stylus pens may be designated with different frequencies for different desired colors to be created on the image. The controller 140 may perform different functions that correspond to touches sensed by the second sensor 130 in accordance with the frequencies of the sensed electromagnetic waves. In the above-described example, the controller 140 may perform a pen function for drawing a line with a color that corresponds to the sensed frequency.

It may be assumed that touches are sensed by both the first sensor 120 and the second sensor 130. For example, a pen touch and a touch of a user's hand that is put on the display may be respectively sensed by the second sensor 130 and the first sensor 120. In order to process such situations, the controller 140 may perform the following processes.

In a first method, if the electromagnetic waves are sensed by the second sensor 130, the controller 140 may perform a function that corresponds to the touch sensed by the second sensor 130 regardless of whether the touch is sensed by the first sensor 120. In other words, if touches are simultaneously sensed by the first sensor 120 and the second sensor 130, the controller 140 may select a function that is performed through the touch sensed by the second sensor 130 in accordance with priorities given to the first and second sensors 120 and 130. Here, a first function that corresponds to the movement sensed by the first sensor 120 can be one of an erasing function and a line-drawing function, and a second function that corresponds to the movement sensed by the second sensor 130 can be the other function. The controller may generate and display graphics on coordinates corresponding to the second object, and the controller may provide the erasing function on coordinates corresponding to the first object.

Exemplary embodiments may include a memory comprising a look-up table associating electromagnetic waves with functions, wherein the controller performs a function corresponding to the detected electromagnetic waves based on correspondence in the look-up table. As such, the memory would provide a correspondence between particular electromagnetic waves and the intended function to be performed. Examples may include a look-up table of particular frequencies of electromagnetic waves or particular identifying information contained in the electromagnetic waves and their correspondence to particular functions. In this way, a particular frequency may correspond to drawing in a particular color. In another instance, a particular frequency may correspond to deletion. As such, different styluses or objects could be used to mimic the options available in the physical world of colored pens and erasers.

In some embodiments, the look-up table may further include consideration of timing of signal detection by the first sensor and the second sensor. In this way, a hovering motion by the object for a duration of time such that the second sensor detects the electromagnetic waves prior to sensing of a touch by the first sensor may result in performing a particular function.

In a second method, the controller 140 may perform a function that corresponds to the sensor that first registers or senses the touch. Specifically, the controller 140 may perform the function that corresponds to the sensor that registers or senses the touch first, the function corresponding to the first sensor or the second sensor to first register or sense the touch. In other words, the controller 140 performs the function that corresponds to the sensor that first senses the touch, and does not perform the other function even if the touch is sensed by the other sensor.

Additionally, the controller 140 may determine whether a unit input is performed. Specifically, the controller 140 may determine an input for a time measured from starting of the touch on the display 110 to releasing of the touch is one unit input. In response to the unit input, the controller 140 can perform only one function that corresponds to the touch sensed by any one of the first sensor 120 and the second sensor 130 for the unit input. The reason why determination of the unit input is necessary is to prevent errors in determining a desired input for different touches, such as a pen drawing a line using a drawing tool on the display 110 of the electronic white board 100 or a writing pen repeating a touch and a release in a state where the user's hand continuously touches the display 110. In an exemplary embodiment, the controller may prioritize the writing pen as an input while also detecting the user's hand resting on the display. The user's hand may be determined as setting a unit input, while the writing pen repeatedly touches the display for writing. In this way, the controller may continue to input the actions of the writing pen until the end of the unit input when the user's hand is lifted.

According to an exemplary embodiment of the first method described above, a function of drawing a line may be performed corresponding to the pen touch that is sensed by the second sensor 130 when the second sensor has priority for the unit input. In such a case, a function that corresponds to the touch detected by the first sensor is not performed or is canceled even if the touch is first sensed by the first sensor.

According to the second method, only a function of drawing a line that corresponds to the firstly touching pen is performed during the unit input, that is, so far as the touch by the drawing tool or the hand is maintained.

The above-described two methods are solutions under the assumption that the touches are sensed by the two sensors 120 and 130. However, from a different viewpoint, a designer may design to exclude a scenario where the two sensors 120 and 130 simultaneously sense the touches. For example, in the case where a touch is performed by a stylus pen, the nib of the stylus pen may be made to be thinner than a gap between two infrared ray (IR) rays so that the touch is not sensed by the first IR sensor 120.

The above-described methods are exemplary, and the existing palm rejection technology, which discriminates between a stylus pen and a hand and excludes a hand touch, may be applied to the electronic white board 100.

The second sensor 130 may be a Bluetooth receiver, and in this case, if a Bluetooth signal is sensed by the second sensor 130, the controller 140 may perform a function that corresponds to the second sensor 130 in accordance with the touch that is sensed by the first sensor 120. Specifically, in the case where the second sensor 130 is a Bluetooth receiver and a Bluetooth signal is sensed by the second sensor 130, the controller 140 may perform a function that corresponds to the second sensor 130 in accordance with the touch that is sensed by the first sensor 120. In the case where the second sensor 130 is a Bluetooth receiver, the coordinates of the touch point are unable to be acquired through the second sensor 130, and thus the controller 140 acquires the touch coordinates from the first sensor 120 that senses the touch. Further, the controller 140 may perform the function that corresponds to the second sensor 130 based on the acquired coordinates.

Additionally, the controller 140 may perform a different function in accordance with identification information included in the Bluetooth signal that is sensed by the second sensor 130. Specifically, if the Bluetooth signal is sensed by the second sensor 130, the controller 140 may receive and analyze the Bluetooth signal to extract the identification information included in the Bluetooth signal, for example, an identification number that is allocated to a pen for creating a specific color, and may perform a function that corresponds to the extracted identification number.

If the electromagnetic waves are not sensed by the second sensor 130, the controller 140 acquires the touch coordinates by the first sensor 120. Specifically, if the electromagnetic waves are not sensed by the second sensor 130, the controller 140 may acquire the coordinates of the object touch on the basis of the touch signal received from the first sensor 120.

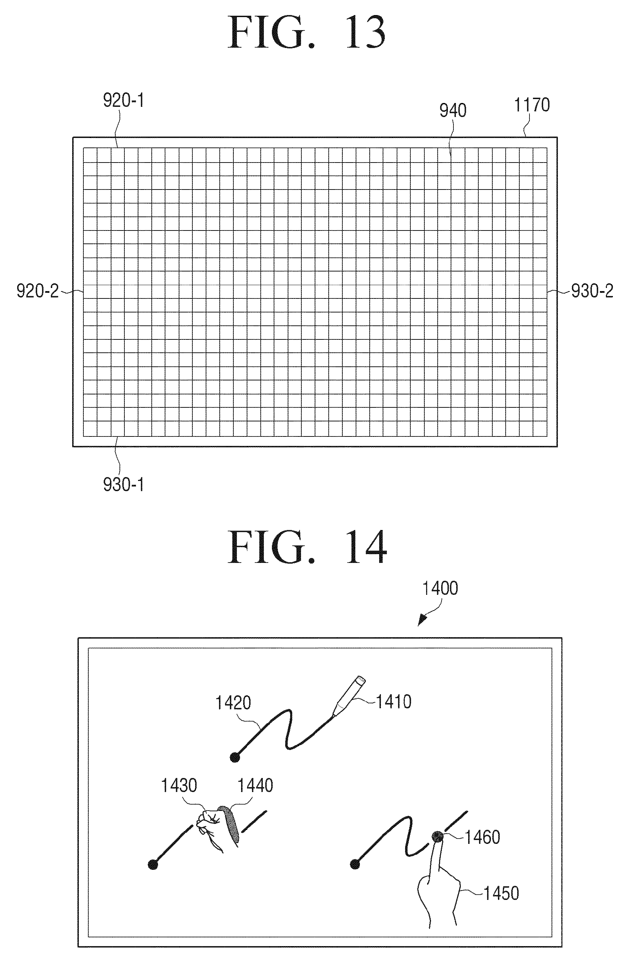

On the other hand, if the first sensor 120 is an IR sensor and the electromagnetic waves are not sensed by the second sensor 130, the controller 140 may perform a different function in accordance with an area where the touch is sensed. Specifically, the controller 140 may perform the different function that corresponds to the touch that is sensed by the first sensor 120 in accordance with the size of the area where the touch is sensed by the first sensor 120. A detailed example thereof will be described later with reference to FIGS. 14 to 15B.

As described above, the electronic white board 100 according to an exemplary embodiment can maintain the utility of the writing board that is familiar to a user, such as the existing white board or black board, and can omit a function selection procedure of a tool menu to improve convenience in use.

Hereinafter, touch types that can be used in the electronic white board 100 according to the present disclosure are enumerated. The touch types may generally be classified into an interaction touch type and a non-interaction touch type. In the description of the present disclosure, the interaction touch type means a touch in which an interaction exists between a touch object and the electronic white board 100, and is defined as a touch type through which the electronic white board 100 can recognize the real form of the object. In contrast, the non-interaction touch type means that the electronic white board 100 senses the touch, but recognizes the touch object as a certain object that is not discriminated from others. The electronic white board 100 may be configured to include the first sensor 120 for a non-interaction touch and the second sensor 130 for an interaction touch. Hereinafter, referring to FIGS. 3 to 10, the touch type that may correspond to the first sensor 120 will be described.

### <Non-interaction touch>

FIG. 3 illustrates a resistive touch type. Referring to FIG. 3, a touch panel includes a base substrate 310, a lower substrate 320, an upper substrate 330, a spacer 340, and a cover glass 350.

If an object 60 touches the cover glass 350, the coordinates are principally determined through detection of an electrical signal. The electrical signal may be generated by transparent electrodes, formed of material such as indium tin oxide (ITO), that are respectively coated on the upper substrate 330 and the lower substrate 320, such that the electrodes on the substrates come in contact with each other by touch pressure. Based on the basic principle as described above, a resistive touch panel is classified into 4/5/6/7/8 wire resistive touch panels in accordance with the number of conductive wires for detecting x and y coordinates.

The resistive touch type may acquire only single touch coordinates. That is, only a single touch may be possible. Further, the resistive touch type can sense the touch with respect to all input means.

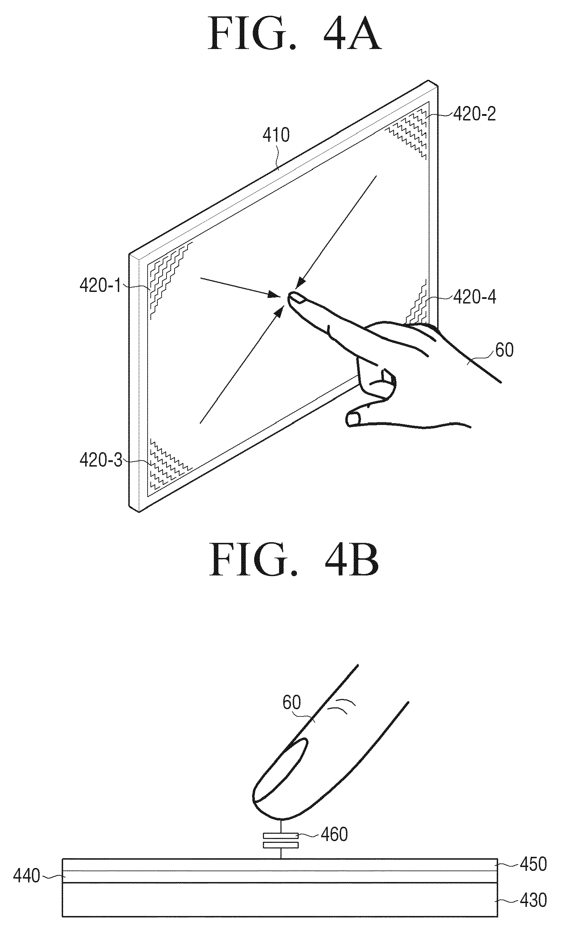

FIGS. 4A and 4B illustrate a capacitive touch type. FIG. 4A illustrates a surface capacitive touch panel and FIG. 4B illustrates a projected capacitive touch panel.

Referring to FIG. 4A, four corners 420-1, 420-2, 420-3, and 420-4 of a surface capacitive touch panel 410 receive a low-level AC voltage. The surface that is touched by the object 60 is coated by a conductive material. If the object 60 having capacitance touches the surface, current flows to a touch point. Sensors can acquire the coordinates of the touch point through sensing of voltage drops at the four corners.

Referring to FIG. 4B, a projected capacitive touch panel has a structure in which a sensor grid 440 that includes a Y-axis transparent electrode and an X-axis transparent electrode is stacked on a base substrate 430 and a cover glass 450 is put on the sensor grid 440. If an object 60 having capacitance 460 touches the surface, the sensor grid 440 senses the change of capacitance of the electrode to acquire the coordinates of the touch point. The projected capacitive touch panel may be classified into a self type and a mutual type. The self type senses the change of the capacitance according to the change of charge that is charged in a sensing electrode before and after the touch. The mutual type senses the change of relative capacitance between a driving electrode and the sensing electrode before and after the touch.

In the capacitive touch type, an input means should be an object having capacitance. The surface capacitive touch type may perform only the single touch, and the projected capacitive touch type may perform multi-touch.

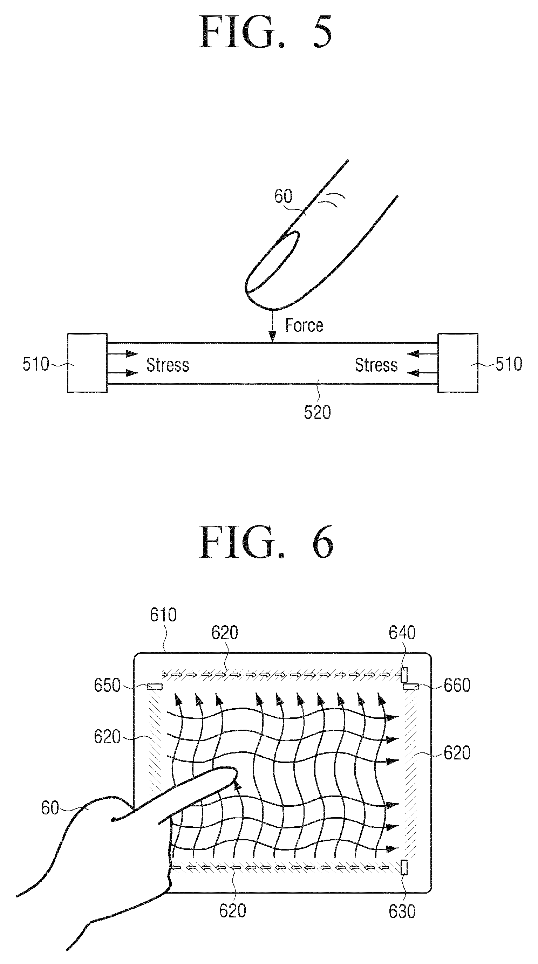

FIG. 5 illustrates a pressure touch type. Referring to FIG. 5, a touch panel includes a touch layer 520 that is touched by an object 60 and sensors 510 provided at edges of the touch layer 520 to sense stresses. Unlike other touch types using the electrical characteristics, the pressure touch type can acquire the coordinates of a touch point as the sensors of the four corners sense the stresses of different levels that are generated when the object 60 mechanically presses the touch layer 520 with a force that mechanically presses the touch layer 520.

The pressure touch type may sense only a single touch. Further, the pressure touch type can sense touches through all kinds of input means.

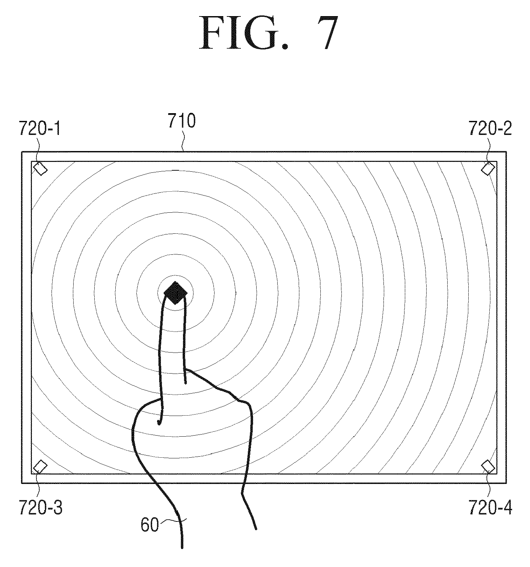

FIGS. 6 and 7 are views explaining a wave touch type. FIG. 6 illustrates a SAW (Surface Acoustic Wave) touch type. Referring to FIG. 6, a touch panel includes a glass substrate 610, reflector arrays 620, an X-axis transmit transducer 630, an X-axis receive transducer 640, a Y-axis transmit transducer 650, and a Y-axis receive transducer 660. The reflector arrays 620 at four corners include pairs of opposite reflectors, and have directivity to propagate sound waves from the transmit transducers 630 and 650 to the receive transducers 640 and 660. Specifically, the sound waves outputted from the transmit transducers 630 and 650 are reflected from the respective reflectors of the reflector array 620 of one side, and the reflected sound waves cross the surface of the glass substrate 610 and strike the reflector array 620 on the opposite side to be received in the receive transducers 640 and 660. The sound waves have a predetermined speed, and the time in which the sound waves arrive at the receive transducers 640 and 660 may differ depending on the propagating distance of the sound waves. The sound waves that propagate the surface of the glass substrate 610 are absorbed in the touch object 60. The SAW touch panel may acquire the touch coordinates through sensing of the time in which the sound waves do not arrive at.

The SAW touch type senses a single touch. Further, the SAW touch type may sense touches through all kinds of input means. However, if the object reflects the sound waves, the object cannot be used as an input means.

FIG. 7 illustrates a bending wave touch type. Referring to FIG. 7, a bending wave touch panel includes a glass substrate 710 and piezoelectric sensors 720-1, 720-2, 720-3, and 720-4 provided at four corners. If an object 60 touches the plane glass 710, vibrations generated by the touch are sensed by the piezoelectric sensors 720-1, 720-2, 720-3, and 720-4 provided at four corners. The piezoelectric sensor 720 may be implemented by a piezoelectric transducer that converts fine vibration into an electrical signal. The touch point may be determined through comparison of levels of the vibrations sensed by the piezoelectric sensors 720-1, 720-2, 720-3, and 720-4. That is, this touch type is similar to a type for detecting the center of an earthquake.

The bending wave touch type also senses a single touch. Further, the bending wave touch type can sense touches through all kinds of input means. However, the bending wave touch type has a limitation in discriminating between "hold" that is an operation to continue the touch and "release" that is an operation to release the touch after touching the surface.

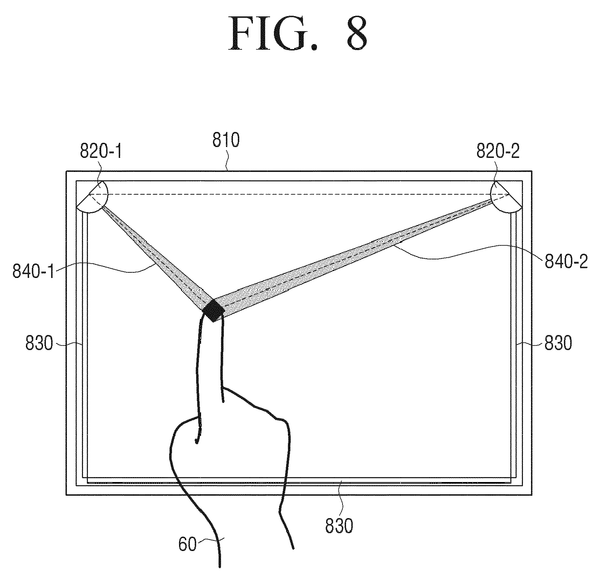

FIG. 8 is a view explaining an optical imaging touch type. Referring to FIG. 8, an optical imaging touch panel includes a glass substrate 810, optical sensors 820-1 and 820-2, and a reflector 830. The optical sensors 820-1 and 820-2 may be implemented by IR cameras. Further, the optical sensors 820-1 and 820-2 are arranged at both corners of the glass substrate 810. The reflector 830 includes an IR light emitting diode (LED). The reflector 830 reflects infrared rays emitted from the IR LED to uniformly irradiate the glass substrate 810 with the infrared rays. The optical sensors 820-1 and 820-2 take images 840-1 and 840-2 of the object 60 that touches the glass substrate 810. The touch coordinates are acquired by a triangle measure method on the basis of different images taken by the two optical sensors 820-1 and 820-2 that are spaced apart from each other for a predetermined distance. Although FIG. 8 exemplifies that only two optical sensors 820-1 and 820-2 are used, three or more optical sensors 820 may be arranged on the circumference of the glass substrate 810 to improve accuracy.

The optical imaging touch type can process multi-touch, but has a technical limitation in detecting two or more touch points. The optical imaging touch type can use any object as an input means.

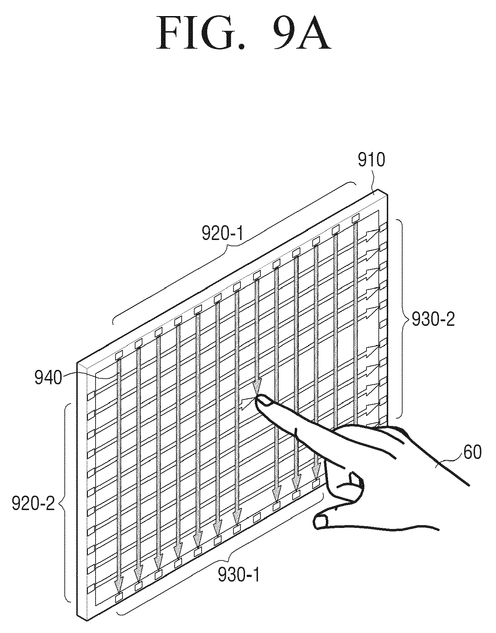

FIG. 9A illustrates an IR matrix touch type. Referring to FIG. 9A, an IR matrix touch panel includes a glass substrate 910, IR LED arrays 820-1 and 920-2, and optical receivers 930-1 and 930-2.

The IR LED arrays 920-1 and 920-2 and the optical receivers 930-1 and 930-2 are arranged at corners of the glass substrate 910 to face each other. Light emitting elements of the IR LED array 920-1 emit infrared rays 940, and the emitted infrared rays are received by a light receiving sensor of the corresponding optical receiver 930-1. If an object 60 touches the glass substrate 910, the object 60 intercepts at least two infrared rays 940 that propagate in horizontal and vertical directions. The touch coordinates are acquired from positions of a light receiving sensor, which does not receive the infrared rays, of the x-axis optical receiver 930-1 for the horizontal position and a light receiving sensor, which does not receive the infrared rays, of the y-axis optical receiver 930-2 for the vertical position.

The IR matrix touch type can process multi-touch. Further, the IR matrix touch type can use any object as an input means.

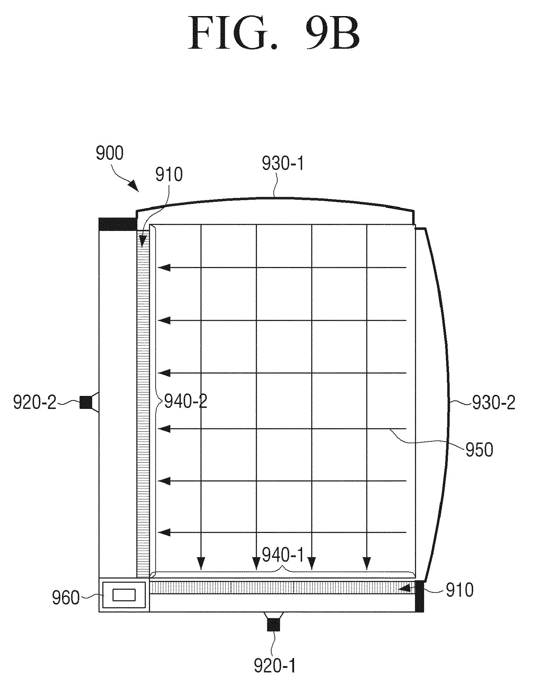

FIG. 9B illustrates an optical waveguide touch type. Referring to FIG. 9B, a touch panel 900 includes a glass substrate 910, a plurality of IR LEDs 920-1 and 920-2, a plurality of parabolic lenses 930-1 and 930-2, a plurality of waveguide arrays 940-1 and 940-2, and an image sensor 960.

The plurality of IR LEDs 920-1 and 920-2 are arranged on one horizontal side and one vertical side of the border of the glass substrate 910. Further, the plurality of IR LEDs 920-1 and 920-2 irradiate the inside of the glass substrate 910 with the infrared rays. The irradiated infrared rays are totally reflected into the glass substrate 910, and arrive at the parabolic lenses 930-1 and 930-2 arranged at opposite corners. The parabolic lenses 930-1 and 930-2 reflect the infrared rays so that the infrared rays propagate in parallel on the glass substrate 910. The infrared rays 950 on the glass substrate 910 arrive at an x-axis waveguide array 940-1 and a y-axis waveguide array 940-2. Each of the waveguide arrays 940-1 and 940-2 includes a plurality of waveguides that correspond to photoelectric elements of an imaging sensor 960. The infrared rays 950 are input to the imaging sensor 960 through the waveguides. The imaging sensor 960 senses whether the infrared rays are received in the plurality of waveguides included in the plurality of waveguide arrays 940-1 and 940-2. Specifically, the imaging sensor 960 senses interceptions of the infrared rays 950 to acquire the touch coordinates of an object that touches the glass substrate 910. That is, the optical waveguide touch type has a structure in which the IR LEDs and the light receiving sensor are modified with the same principle as that of the IR matrix touch type.

Since the optical waveguide touch type has the same principle as that of the IR matrix touch type, the optical waveguide touch type can process multi-touch, and can use all objects as input means.

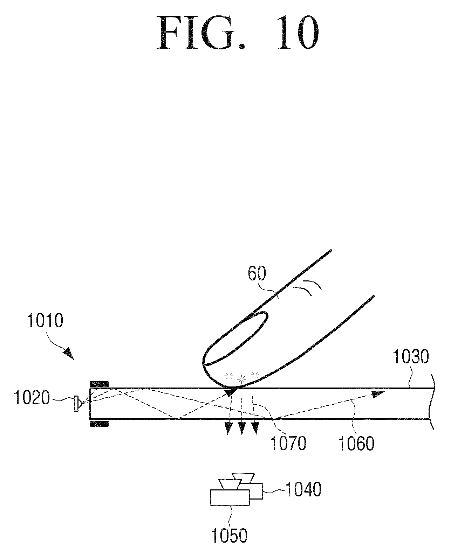

FIG. 10 illustrates a FTIR (Frustrated Total Internal Reflection) touch type. Referring to FIG. 10, a FTIR touch panel 1010 includes an IR LED 1020, an acryl plate 1030, a projector 1040, and an IR camera 1050.

The IR LED 1020 irradiates the inside of the acryl plate 1030 with infrared rays 1060. The irradiated infrared rays 1060 are totally reflected from the inside of the acryl plate 1030. When an object 60 touches the surface of the acryl plate 1030, the total reflection of the infrared rays 1060 is frustrated by the object 60, and the infrared rays 1060 are scattered below the acryl plate 1030. The scattered infrared rays 1070 are sensed by the IR camera 1050. Through the structure that senses the touch at a far apart position using the IR camera 1050, unlike other touch types, the projector 1040 irradiates the acryl plate 1030 with beams to display an image.

The FTIR touch type can process multi-touch. In the FTIR touch type, an input means is limited to the object (bare hand) that can frustrate the total reflection of light.

### <Interaction touch>

FIGS. 11A and 11B illustrate an EMI (Electromagnetic Induction) touch type. One type of input means for a touch with the EMI touch type is a stylus pen. The EMI type may be divided into an active type and a passive type on the basis of the stylus pen. FIG. 11A illustrates the passive type, and FIG. 11B illustrates the active type.

Referring to FIG. 11A, a touch panel includes a glass substrate 1110, and a sensor grid 1170 including a plurality of conducting wires 1120. AC current flows through the plurality of conducting wires 1120, and a magnetic field 1130 is formed on the surface of the glass substrate 1110 by the current flow.

The stylus pen 1140 includes a resonance circuit 1150 provided therein. The resonance circuit 1150 emits electromagnetic waves 1160 that are induced by the magnetic field 1130 formed on the surface of the glass substrate 1110. The sensor grid 1170 senses the electromagnetic waves 1160 emitted from the stylus pen 1140. The sensor grid 1170 outputs a corresponding signal to a position where the electromagnetic waves 1160 are sensed to acquire X and Y coordinates of a touch point.

Referring to FIG. 11B, a touch panel includes a glass substrate 1110 and a sensor grid 1170. Unlike the touch panel of FIG. 11A, the active touch panel does not form a magnetic field on the surface of the glass substrate 1110.

Instead, a stylus pen 1140' includes a battery 1180 provided therein, and emits electromagnetic waves 1190 using the power of the battery 1180. The sensor grid 1170 senses the emitted electromagnetic waves 1190, and outputs a corresponding signal to a position where the electromagnetic waves 1190 are sensed to acquire X and Y coordinates of a touch point.

The stylus pens 1140 and 1140' that are used in the two EMI touch types as described above can vary frequencies of the emitted electromagnetic waves. Specifically, the passive stylus pen 140 may further include a variable capacitor in the internal resonance circuit 1150. The variable capacitor can vary the capacitance in accordance with pressure that is sensed by the nib of the stylus pen 1140 or user's operation of an input element. The capacitance of the changed resonance circuit 1150 changes the resonance frequency of the resonance circuit 1150, and as a result, changes the frequency of the emitted electromagnetic waves 1160. Similarly, the resonance circuit 1150 may further include a variable inductor, and the stylus pen 1140 may emit the electromagnetic waves 1160 having the frequency that is changed in accordance with the changed inductance of the variable inductor.

The active stylus pen 1140' includes an oscillator that is driven by the battery 1180. The oscillator generates a predetermined frequency using a vibrator. The frequency that is generated by the oscillator is a high frequency that is not sensed by the sensor grid 1170. A divider divides the predetermined frequency that is generated by the oscillator in a predetermined integer ratio. Here, the integer ratio in which the divider divides the frequency may be varied by pressure of the nib of the stylus pen 1140 or user's operation. That is, the stylus pen 1140' may emit the electromagnetic waves 1190 having the frequency that is changed in accordance with the changed division ratio of the divider.

The stylus pens 1140 and 1140' used in the EMI touch type may be allocated with inherent frequencies in accordance with their kind. In the case of the passive stylus pen 1140, the inherent frequency may be determined by inductance and capacitance values of the resonance circuit 1150. In the case of the active stylus pen 1140', the inherent frequency may be determined by an initial division ratio of the vibrator or divider that determines the output of the oscillator. The kind of the stylus pens 1140 and 1140' may mean settings to perform different functions, such as a drawing color of the pen. For example, the stylus pens 1140 and 1140' may include a red pen, a blue pen, and a yellow pen for drawing lines having different colors. It is described that the stylus pens 1140 and 1140' are used as the input means, but are not limited thereto. For example, a block having an eraser shape, which emits electromagnetic waves of a predefined frequency, may be used as an input means for performing an eraser function.

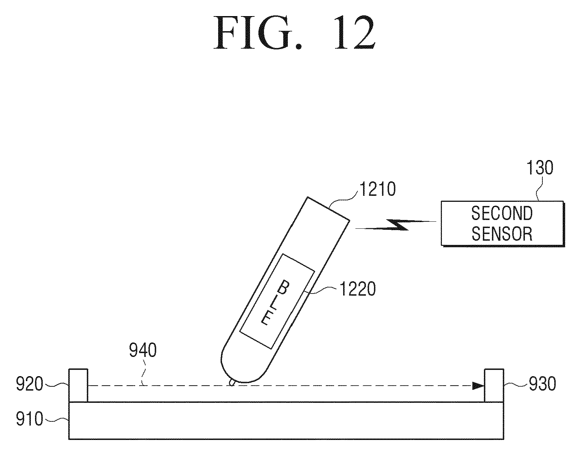

FIG. 12 is a view explaining a Bluetooth touch type. Referring to FIG. 12, a stylus pen 1210 includes a Bluetooth module 1220 for Bluetooth communication. Specifically, the stylus pen 1210 that is an input means for touching the surface of the display may include the Bluetooth module 1220 that performs Bluetooth communication with the second sensor 130.

In an embodiment, the Bluetooth module 1220 may follow the communication standard according to Bluetooth 4.0. BLE (Bluetooth Low Energy) that is announced in Bluetooth 4.0 is a wireless communication method with lightweight and low power consumption, different from the existing Bluetooth. In this case, the stylus pen 1210 serves as a peripheral device, and the electronic white board 100 serves as a central device that discovers the peripheral device through scanning for sensing advertising packets that are peripherally broadcast.

Advertising data or scan response data that the BLE module 1220 transmits to the second sensor 130 through a Bluetooth signal may include information for identifying the stylus pen 1210. For example, the identification information may be expressed by a code that is expressed by characters, numerals, symbols, and the like, which are classified in accordance with the kind of the stylus pen 1210. The identification information that is received through the second sensor 130 may be used to determine what is the function to be performed through the touch stylus pen 1210.

In an embodiment of FIG. 12, it may be difficult to determine the touch point of the stylus pen 1210 only through the electromagnetic wave signal sensed through the second sensor 130. Accordingly, in this embodiment, the touch point is identified through the first sensor 120. Specifically, the first sensor 120 may be an IR matrix touch type sensor as described above with reference to FIG. 9A. Referring to FIG. 12, an IR LED 920 irradiates infrared rays 940 from a corner of one side of the glass substrate 910. Further, a light receiving sensor 930 for receiving the infrared rays 940 corresponding to the IR LED 920 is arranged at a corner of an opposite side of the glass substrate 910. The light receiving sensor 930 can sense that the infrared rays 940, which are received through the touch of the stylus pen 1210, are intercepted. Through at least two light receiving sensors 930 that do not receive the infrared rays 940, the electronic white board can acquire the touch coordinates of the stylus pen 1210.

The non-interaction touch types and the interaction touch types as described above are implemented by the first sensor 120 and the second sensor 130 of the electronic white board 100. However, in combining the two touch types, restrictions of the respective touch sensing types may be properly designed by those skilled in the art. For example, in the case where the capacitive touch type is implemented by the first sensor, the nib of the stylus pen of the interaction touch may be designed to be surrounded by an insulating material.

FIG. 13 is a view illustrating an exemplary example of an electronic white board implemented according to an embodiment of the present disclosure.

Referring to FIG. 13, an electronic white board adopts a combination of the IR matrix touch type of FIG. 9A and the passive EMI touch type of FIG. 11A. Specifically, the electronic white board includes IR LED arrays 920-1 and 920-2 that are arranged on an upper side and a left side of a touch panel 1170, optical receivers 930-1 and 930-2 arranged on a lower side and a right side of the touch panel 1170, and a sensor grid 1170 configured to form a magnetic field on the surface of the display and to sense electromagnetic waves.

If a user touches the surface of the display for displaying an image through its front surface with his/her finger, the first sensor that is implemented by an IR matrix senses the touch of the finger. If the user touch the display with a stylus pen, the sensor grid 1170 senses the touch of the stylus pen through electromagnetic waves emitted from the stylus pen. In this case, the nib of the stylus pen may be finer than a gap between the infrared rays 940 of the IR matrix, and the stylus pen may be made of a material that does not interfere with directivity of the infrared rays 940.

FIG. 14 illustrates an exemplary embodiment in which two or more different functions are performed on the electronic white board of FIG. 13.

Referring to FIG. 14, an electronic white board 1400 senses a touch of a stylus pen 1410 and touches of user's hands 1430 and 1450, and perform a function corresponding to the touches.

Specifically, the electronic white board 1400 may perform a function of drawing a line 1420 along a movement path of touch coordinates of the stylus pen 1410 to correspond to the touch of the stylus pen 1410. In other words, the electronic white board 1400 may generate and display a line graphic object 1420 along a point that is touched by the nib of the stylus pen 1410.

Separately, the electronic white board 1400 may perform an eraser function to erase the graphic object to correspond to the touches of the hands 1430 and 1450. That is, the electronic white board 1400 may delete the graphic object that is generated at the coordinates of a region in which the hand touch is sensed. Here, the electronic white board 1400 may determine an area that is deleted corresponding to the size of the area in which the touch is sensed. Referring to FIG. 14, in the case of the hand touch illustrated on the left side in the drawing, the electronic white board 1400 deletes the graphic object that is generated in a large area 1440 that is touched by a clenched hand 1430. In the case of the hand touch illustrated on the right side in the drawing, the electronic white board 1400 deletes the graphic object that is generated in a small area 1460 that is touched by the tip of a finger. In this way, the user may be able to vary the desired area that is erased.

The area that is deleted that corresponds to different touch inputs may be predetermined to a size different from the area of covered by the touch.

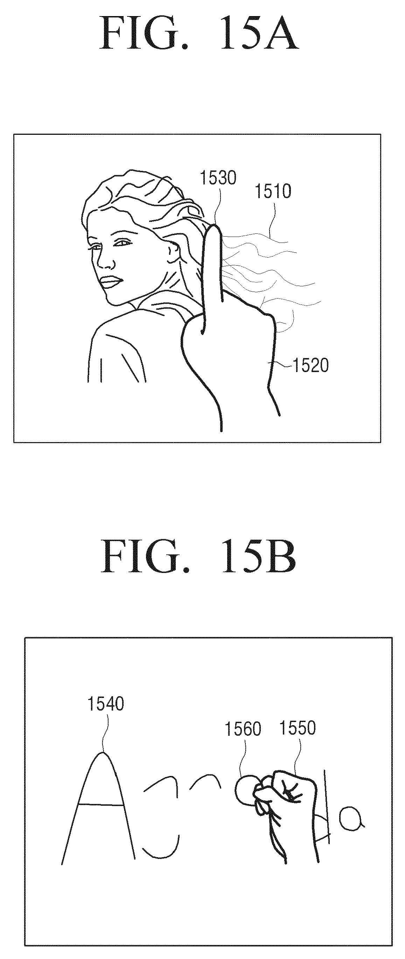

FIGS. 15A and 15B illustrate in detail an erasing function of FIG. 14.

Referring to FIG. 15A, the electronic white board displays a portrait that is drawn by lines having various colors to correspond to various kinds of touch inputs of the stylus pen by a user's finger 1520. Further, the electronic white board erases a hair portion 1510 that is displayed on a touch region 1530 corresponding to the touch of the user's finger 1520. Here, the electronic white board may thinly erase the hair portion 1510 corresponding to the size of the area 1530 that is touched by the finger 1520.

In some embodiments, the electronic white board may gradually lower saturation of the hair portion 1510 that is displayed on the region on which the touch of the finger 1520 is sensed in accordance with the number of touches.

Referring to FIG. 15B, the electronic white board displays some enumerated characters 1540. The user touches a large area of the display with his/her fist. In this case, if the hand touch over a threshold area is sensed, the electronic white board performs an erase tool 1560 of a predetermined size.

Referring to FIG. 15A, the electronic white board erases the graphic object displayed on the touch region corresponding to the region that is touched by the user's hand. Referring to FIG. 15B, if a touch over a predetermined area is sensed, the electronic white boards a figure of a predetermined size that indicates a region being erased, and erases the graphic object that is displayed on a portion through which the figure that moves according to movement of the touched point passes.

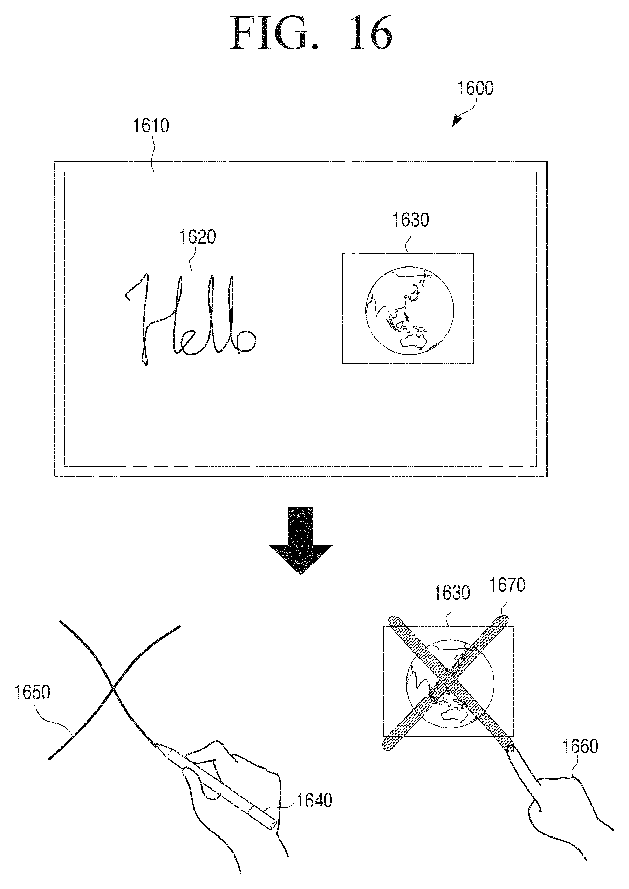

FIG. 16 illustrates another embodiment in which two or more different functions are performed on the electronic white board of FIG. 13.

Referring to FIG. 16, an electronic white board 1600 is hung on the wall. An image 1610 that is displayed on the electronic white board 1600 includes characters 1620 that a user writes using a stylus pen and an earth drawing 1630 that visually displays a prestored drawing file.

Here, a user touches an empty space of the image 1610 in the form of "X" with a stylus pen 1640. The electronic white board 1600 senses the touch of the stylus pen 1640 and displays the corresponding X-shaped graphic object 1650 in accordance with the X-shaped touch.

On the other hand, when the user touches a portion of the image 1610 displaying the earth drawing 1630 in the form of "X" with his/her hand 1660, a different function may be performed. In an exemplary embodiment, the electronic white board 1600 senses the touch of the hand 1660, and performs a function that corresponds to the X-shaped touch gesture. The electronic white board 1600 may display a graphic object 1670 along a hand touch path with a predetermined color so that the user can confirm the touch gesture. As an example, if the X-shaped hand touch gesture is sensed on the graphic objects 1620 and 1630 that is displayed on the image 1610 through the user, the electronic white board 1600 may perform a function of deleting the overlapped graphic objects 1620 and 1630 in one unit. In the exemplary embodiment shown in FIG. 16, the earth drawing 1630 that the touch gesture 1670 overlaps may be removed from the image 1610.

As described above, the electronic white board may determine whether to perform a function of recognizing a pattern with respect to the touch that is sensed depending on whether the electromagnetic waves are sensed, and in the case of performing the pattern recognition function, the electronic white board may recognize the predetermined gesture from the touched pattern and perform a function corresponding to the recognized gesture.

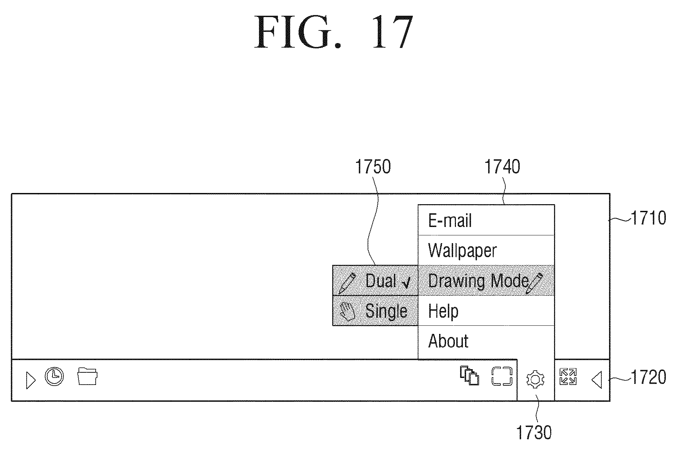

FIG. 17 is a view explaining an interface screen that provides a menu for selecting a dual function setting according to an embodiment of the present disclosure.

Referring to FIG. 17, an image 1710 that is displayed on an electronic white board includes a menu bar 1720 for setting functions of the electronic white board.

If a user selects a setting button of the menu bar 1720, the electronic white board displays a menu 1740 in which setting items are enumerated. If a drawing mode item that is included in the displayed menu 1740 is selected, the electronic white board further displays two options 1750.

Of the two displayed options 1750, "Dual" is an option that is set to identify a touch input of a certain object by a first sensor and a touch input of a stylus pen by a second sensor. Specifically, if "Dual" is selected, the electronic white board is set to perform different functions corresponding to the touches depending on whether electromagnetic waves are sensed. In contrast, "Single" is an option that is set to perform a selected function corresponding to touches of all objects regardless of whether the touch is performed by the stylus pen. That is, if "Single" is selected, the electronic whiteboard performs a function selected by a user, for example, a function of drawing a line through a pen tool or a function of erasing a graphic object through an eraser tool, corresponding to the touch input without considering whether the electromagnetic waves are sensed.

Through the two options 1750 as described above, the user can use the electronic white board without the stylus pen.

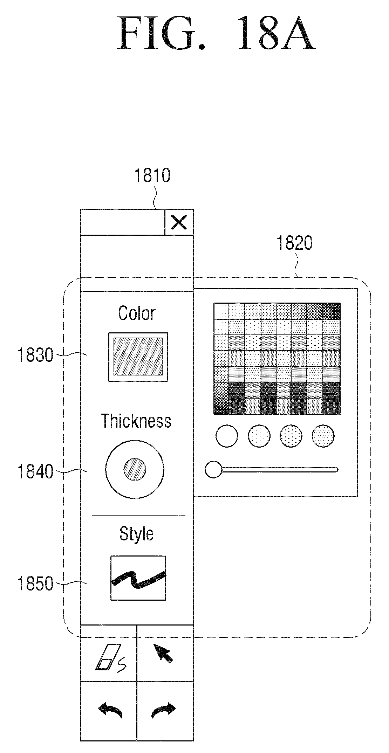

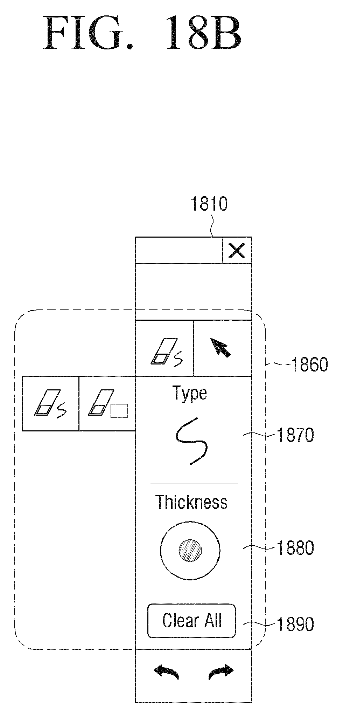

FIGS. 18A and 18B are views illustrating a menu in which setting of a pen and an eraser in a toolbar window can be changed.

Referring to FIG. 18A, a menu 1810 includes options 1820 for setting parameters of a pen tool.

"Color" 1830 may set a color of a line to be displayed at touch coordinates when the pen tool is executed. A lower level menu illustrated in FIG. 18A includes a selector for setting representative colors that are shown in the form of a lattice, a selector for setting shading, and a scroll for setting opacity.

"Thickness" 1840 may set the thickness of a line to be displayed at the touch coordinates when the pen tool is executed.

"Style" 1850 may set roughness or smoothness of a line that is drawn along the touch point when the pen tool is executed.

Referring to FIG. 18B, the menu 1810 includes options 1860 for setting parameters of an eraser tool.

"Type" 1870 includes a first option to erase a graphic object at touch coordinates and a second option to erase a graphic object in a square region that is generated through touch and drag.

"Thickness" 1848 may set the size of a region being erased at the touch coordinates.

"Clear All" 1890 may erase all graphic objects displayed on the image if this option is selected.

The options of the menu 1810 may be changed in accordance with identification information of electromagnetic waves received from the touch object. For example, the electronic white board may receive the user's input for differently setting function to be performed in accordance with the kind of identified stylus pens. Further, the electronic white board may perform different settings in accordance with the kind of the object that is identified from the electromagnetic waves.

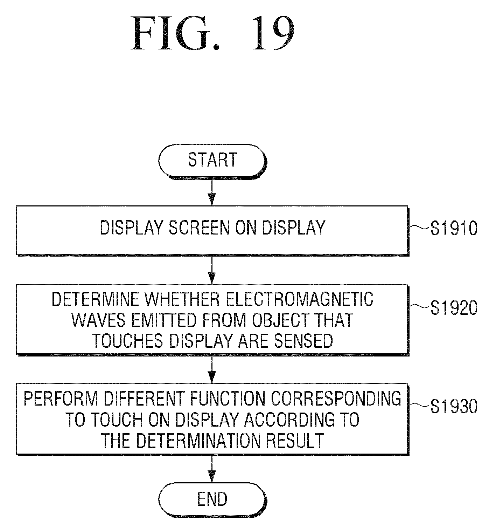

FIG. 19 illustrates a method for controlling an electronic white board according to an embodiment of the present disclosure.

Referring to FIG. 19, according to the control method, an image is first displayed on a display S1910. Specifically, an electronic white board may display the image for performing a function that corresponds to a touch on the display.

Next, it is determined whether electromagnetic waves that are emitted from an object that touches the display are sensed S1920. Specifically, the electronic white board can sense whether the electromagnetic waves are emitted from the object through a sensor. The sensor for sensing the electromagnetic waves may be implemented by an EMI sensor or a Bluetooth receiver that senses a grid or Bluetooth signal.

Next, a different function that corresponds to the touch on the display is performed in accordance with the result of the determination of S1920 (S1930). Specifically, the electronic white board may perform a different function that corresponds to the touch on the display that is sensed by any one of a first sensor and a second sensor in accordance with the result of determining whether the electromagnetic waves are sensed. That is, the electronic white board may acquire touch coordinates at which the touch of the object is performed from any one of the first sensor and the second sensor. Further, the electronic white board may perform the different function that corresponds to the touch depending on whether the electromagnetic waves are sensed.

Here, the electronic white board may acquire the touch coordinates from a signal sensed by the first sensor that uses the non-interaction touch type as described above. Further, the electronic white board may acquire the touch coordinates from a signal sensed by the second sensor that uses the interaction touch type as described above.

At S1930, a different function that corresponds to the touch may be performed in accordance with the frequency of the sensed electromagnetic waves. Specifically, the control method may include analyzing the frequency of the sensed electromagnetic waves and performing a function that corresponds to the analyzed frequency.

Further, at S1930, if the touch coordinates of the object that emits the electromagnetic waves through the EMI touch type can be acquired, the function that corresponds to the touch sensed by the second sensor may be performed regardless of whether the touch is sensed by the first sensor. In another embodiment, at S1930, the function that corresponds to the touch sensed by the sensor that first senses the touch for a unit input time may be performed.

In contrast, in the case where the second sensor is implemented by the interaction touch type through a Bluetooth receiver, at S1930, a function that corresponds to a Bluetooth signal may be performed in accordance with the touch that is sensed by the first sensor. Here, the function being performed may differ in accordance with identification information that is included in the Bluetooth signal. In an embodiment, the first sensor, which acquires the touch coordinates of the object that emits the Bluetooth signal, may be an IR sensor (IR matrix sensor or optical waveguide sensor).

At S1930, the electronic white board may perform a different function in accordance with the size of an area in which the touch is sensed. Here, the electronic white board may perform the different function that corresponds to the touch sensed by the first sensor or the second sensor with the size parameter that is changed in accordance with the size of the area in which the touch is sensed. For example, the electronic white board may differently adjust the size of an eraser for performing an eraser function in accordance with the area in which a hand touch is sensed.

According to the method for controlling an electronic white board as described above, different functions can be performed only through the touch of different objects without selection of a separate tool menu. Further, the above-described control method may be implemented in the electronic white board of FIG. 2 and a touch display device including a plurality of touch sensors.

Meanwhile, even if it is explained in the present specification that all the components of the embodiments of the present disclosure are combined with one another or operate in combinations with one another, there is no limitation thereto. That is, as long as it is within the purpose of the present disclosure, one or more of the components may be selectively combined. In addition, one or more of the components may be selectively combined and embodied as a computer program having a program module that performs one or more functions combined in one or more hardware. Codes and code segments that configure such a computer program may be easily conceived by one skilled in the related art. Such a computer program may be stored in a non-transitory computer readable medium, and then be read and executed by the computer, thereby providing the embodiments of the present disclosure.

In an exemplary embodiment, a non-transitory computer readable medium refers to a computer readable medium that is configured to store data semi-permanently unlike a medium that stores data for a short period of time such as a register, cache, and memory and the like. More specifically, the aforementioned programs may be stored in and provided through a non-transitory computer readable medium such as a CD, DVD, hard disk, blue ray disk, USB, memory card, and ROM and the like.

While the present disclosure has been shown and described with reference to various embodiments thereof, it will be understood by those skilled in the art that various changes in form and details may be made therein without departing from the scope of the present disclosure as defined by the appended claims and their equivalents.

## Claims

1. An electronic white board comprising:
a display;
a first sensor configured to sense a movement of a first object on the display;
a second sensor configured to sense a movement of a second object; and
a controller configured to perform a first function that corresponds to the sensed movement of the first object and a second function that corresponds to the sensed movement of second object,
wherein the first sensor is different from the second sensor.

2. The electronic white board as claimed in claim 1,
wherein the first sensor is an IR (Infrared Ray) sensor or an touch sensor, wherein the second sensor is an EMI (Electromagnetic Induction) sensor.

3. The electronic white board as claimed in claim 1 or 2,
wherein the first function is one of an erasing function and a line-drawing function, and the second function is the other function.

4. The electronic white board as claimed in claim 2 or claim 3 when dependent on claim 2,
wherein the controller is further configured to acquire coordinates based on electromagnetic waves sensed from the EMI sensor.

5. The electronic white board as claimed in claim 1,
wherein the second sensor is a Bluetooth receiver.

6. The electronic white board as claimed in claim 5, wherein the function is determined based on identification information that is included in the sensed Bluetooth signal.

7. The electronic white board as claimed in claim 1, wherein the first sensor is an IR (Infrared Ray) sensor, and
the controller acquires coordinates corresponding to the first object from the IR sensor.

8. The electronic white board as claimed in claim 3 or any when dependent on claim 3, wherein the controller generates and displays graphics on coordinates corresponding to the second object, and
the controller provides the erasing function on coordinates corresponding to the first object.

9. A method for controlling an electronic white board, comprising:
sensing a movement of a first object on a display by a first sensor and a movement of a second object on the display by the second sensor; and
performing a first function that corresponds to the sensed movement of the first object and a second function that corresponds to the sensed movement of second object,
wherein the first sensor is different from the second sensor.

10. The method as claimed in claim 9, wherein the first sensor is an IR (Infrared Ray) sensor or a touch sensor,
wherein the second sensor is an EMI (Electromagnetic Induction) sensor.

11. The method as claimed in claim 9 or 11,
wherein the first function is one of an erasing function and a line-drawing function, and the second function is the other function.

12. The method as claimed in claim 10 or claim 11 when dependent on claim 10,
wherein the performing acquires coordinates based on electromagnetic waves detected from the EMI sensor.

13. The method as claimed in claim 9,
wherein the second sensor is a Bluetooth receiver.

14. The method as claimed in claim 13, wherein the performing performs the function based on identification information that is included in the sensed Bluetooth signal.

15. The method as claimed in claim 9, wherein the first sensor is an IR (Infrared Ray) sensor, and
wherein the performing acquires coordinates corresponding to the first object from the IR sensor.
